# EUROPEAN PATENT APPLICATION

(11) **EP 4 375 771 A1**
(43) Date of publication of application: **29.05.2024**
(21) Application number: 23207449.2
(22) Date of filing: 02.11.2023
(51) Int. Cl.: G05B 19/042, F16K 37/00, G06T 7/00

(54) **MONITORING CHANGES IN PROCESS STATIONS UTILIZING VISUAL INDICATORS**

(30) Priority: 02.11.2022 US 202217979424
(71) Applicant: ABB SCHWEIZ AG, 5400 Baden (CH)
(72) Inventor: STRAUCH, Andreas, Quebec, G1P0B2 (CA)
(74) Representative: Zimmermann & Partner Patentanwälte mbB

(57) **Abstract**

In one aspect, a system is configured to detect a trigger event, identify a first digital image of the process station captured prior to the trigger event, identify a second digital image of the process station captured in response to the trigger event, and identify, in the first and second digital images, a visual indicator of the process station. The system is further configured to compare the visual indicator in the first and second digital images to identify a change in the visual indicator, and identify configuration data for the process station that defines an expected change in the visual indicator from the first digital image to the second digital image. The system is further configured to determine whether the change deviates from the expected change, and generate indicia representative of the identified change in response to determining that the change deviates from the expected change.

## Description

### BACKGROUND

The field of the disclosure relates to monitoring process stations, and more particularly, to monitoring visual indicators of a process station in order to determine the condition and/or the performance changes at the process station that may occur in response to various trigger events, such as valve position changes.

Samples taken for analysis often require conditioning before the samples are suitable for analysis by an analysis system. For example, samples may be processed to remove unwanted components and to ensure that the sample is presented to the analysis system at the correct temperature, pressure, and flow rate to meet the requirements of the analysis system. Problems in a sample conditioning system, a type of process station, can affect the performance of the analysis system and the integrity of the analytical measurements generated by the analysis system. Sample conditioning systems may also be affected by ambient conditions, such as changes in temperature and/or the presence of gas contaminants.

Sample conditioning systems include multiple components that work together to ensure that the samples are conditioned properly. It has been observed that up to eighty percent of failures at the analysis system arise due to issues at the sample conditioning system. To monitor the performance of the sample conditioning system, various gauges that display measurements regarding the current status of the sample conditioning system and positions of valves of the sample conditioning system are manually reviewed by an operator. However, because some industrial plants may include thousands of sample conditioning systems, with each sample conditioning system including a number of valves and gauges, the monitoring rate is often low (e.g., once per day or once per week). While installing digital measurement systems at the sample conditioning systems is one option, the cost of retrofitting the thousands of sample conditioning systems currently installed in an industrial plant is cost prohibitive.

Based on the forgoing discussion, it therefore remains desirable to improve upon monitoring the conditions at and/or the performance of process stations without relying on an operator observation and/or the use of expensive instrumentation systems.

### BRIEF DESCRIPTION

In one aspect, a system for monitoring a process station is provided. The system includes at least one processor that is configured to detect a trigger event, identify, in response to the trigger event, a first digital image of the process station captured prior to the trigger event, and identify a second digital image of the process station captured in response to the trigger event. The at least one processor is further configured to identify, in the first digital image and the second digital image, a visual indicator of the process station, compare the visual indicator in the first digital image to the visual indicator in the second digital image to identify a change in the visual indicator, and identify configuration data for the process station that defines an expected change in the visual indicator from the first digital image to the second digital image. The at least one processor is further configured to determine whether the change deviates from the expected change, and generate indicia representative of the identified change in response to determining that the change deviates from the expected change.

In another aspect, a method of monitoring a process station is provided. The method includes detecting a trigger event, identifying, in response to the trigger event, a first digital image of the process station captured prior to the trigger event, and identifying a second digital image of the process station captured in response to the trigger event. The method further includes identifying, in the first digital image and the second digital image, a visual indicator of the process station, comparing the visual indicator in the first digital image to the visual indicator in the second digital image to identify a change in the visual indicator, and identifying configuration data for the process station that defines an expected change in the visual indicator from the first digital image to the second digital image. The method further includes determining whether the change deviates from the expected change, and generating indicia representative of the identified change in response to determining that the change deviates from the expected change.

In another aspect, a system for monitoring an operation of a process station is provided. The process station includes one or more instruments that visually display their measurements of the operation of the process station, and one or more valves that visually display their positions. The system includes at least one processor configured, in response to a trigger event, to identify configuration data that defines expected changes in values of one or more of the measurements and expected changes in the positions for the one or more valves, and identify a first digital image and a second digital image of the process station that includes digital representations of the one or more instruments and the one or more valves. The first digital image is captured prior to the trigger event and the second digital image is captured in response to the trigger event. The at least one processor is further configured to identify, based on the digital representations in the first digital image and the second digital image, changes in the values of one or more of the measurements and changes in the positions of the one or more valves. The at least one processor is further configured to generate indicia representing at least one of the changes in the values of one or more of the measurements in response to determining that the values deviate from the expected changes in the values, and the changes in the positions of the one or more valves in response to determining that the positions deviate from the expected changes in the positions.

### DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of a system for monitoring a process station in an exemplary embodiment.
FIG. 2 depicts a digital image of various visual indicators of the process station of FIG. 1.
FIG. 3 is a flow chart of a method of monitoring a process station in an exemplary embodiment.
FIGS. 4-6 depict additional details of the method of FIG. 3 in exemplary embodiments.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, the terms "processor" and "computer," and related terms, e.g., "processing device," "computing device," and "controller" are not limited to just those integrated circuits referred to in the art as a computer, but broadly refers to a microcontroller, a microcomputer, an analog computer, a programmable logic controller (PLC), an application specific integrated circuit (ASIC), and other programmable circuits, and these terms are used interchangeably herein. In the embodiments described herein, "memory" may include, but is not limited to, a computer-readable medium, such as a random-access memory (RAM), a computer-readable non-volatile medium, such as a flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a touchscreen, a mouse, and a keyboard. Alternatively, other computer peripherals may also be used that may include, for example, but not be limited to, a scanner. Furthermore, in the example embodiment, additional output channels may include, but not be limited to, an operator interface monitor or heads-up display. Some embodiments involve the use of one or more electronic or computing devices. Such devices typically include a processor, processing device, or controller, such as a general-purpose central processing unit (CPU), a graphics processing unit (GPU), a microcontroller, a reduced instruction set computer (RISC) processor, an ASIC, a programmable logic controller (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are not intended to limit in any way the definition and/or meaning of the term processor and processing device.

As discussed previously, manual review of the current status of a process station by an operator is typically performed infrequently, due to the large number of process stations that may be found in a typical industrial plant. Typically, an operator visually reviews various gauges and valve positions at the process station, and attempt to determine, based on experience and/or using set procedures, whether the process station is operating normally. Because this activity is often performed infrequently, due to the potentially large number of process stations that may exist in an industrial plant, the process stations may deviate from their expected performance and/or operating condition, which may go unnoticed until a follow up observation of the process station is performed by the operator. The result is that the operation of the process station may deviate from a desired operating state, which may adversely impact the downstream processes that rely on the process station. For instance, samples conditioned by a sample conditioning system and provided to a downstream analysis system may result in the samples being unusable or inaccurate when the sample conditioning system does not operate as expected.

In the embodiments described herein, digital images of a process station are captured and analyzed in response to trigger events to identify the changes in visual indicators at the process. For example, a valve position change at the process station may generate a trigger, which causes one or more digital images of the process station to be captured and compared with one or more previous digital images captured prior to the trigger event. Changes in the visual indicators at the process station between the digital images before and after the trigger event are compared with the expected changes (e.g., the expected changes due to the trigger event). If the changes deviate from the expected changes, then indicia is generated. In continuing with the example, a valve position change may result in an expected pressure rise at the process station, which is measured. If the change in pressure is not detected (e.g., the change in pressure deviates from the expected change in pressure), indicia may be generated, which directs an operator to investigate if there is a problem at the process station. Generally, the indicia may include any type of information as desired. For instance, the indica may include the current values of measurements, the current positions of valves, etc., the prior values of the measurements (e.g., prior to the trigger), the prior positions of the valves, etc., or combinations thereof. In another example, the process station may include one or more filters to remove particles. Over time, the filters may become clogged. If pressure sensors / indicators are available upstream and downstream of the filter, then an indica may be generated when the pressure difference between the upstream and the downstream pressure sensors crosses a pre-determined threshold that indicates that the filter is clogged. An operator may then be directed to exchange the filter.

In some embodiments, the visual indicators extracted from the digital images are measurements displayed by instruments at the process station. In other embodiments, the visual indicators extracted from the digital images are valve position indicators (e.g., a handle) displayed by valves at the process station.

In one embodiment, a system is described that analyzes the digital images. The system may, for example, reside as a stand-alone computing device that processes digital images generated by cameras that image the process station. In other embodiments, the system may be included within a camera, operating as a smart camera. In other embodiments, the system may operate as a cloud-based monitoring service. In these embodiments, the cameras may upload digital images of the process station to cloud storage, which are analyzed by virtual machine(s) executing the cloud-based monitoring service.

Some examples of the event triggers that may initiate the analysis include, but are not limited to, noise, vibration, valve actuation, opening an enclosure at the process station, and/or a motion detected proximate to the process station, etc.

Some examples of the visual indicators that may be monitored include, but are not limited to, the positions of valves of the process station, the measurements (e.g., flow rates, pressures, temperatures, etc.) generated by instruments of the process station, the rate of change of the measurements, alarm lights or indicator lights displayed at the process station, liquids and/or gasses released by the process station, vibrations generated by the process station, a discoloration present at the process station, the movement of tubes over time, etc.

In some embodiments, the system comprises one or more cameras that capture images of the gauges, flowmeters, and other relevant visual indicators associated with the process station. The cameras may utilize wireless network connections, wired network connections, be battery operated, or hard wired to electrical power in various embodiments.

In some embodiments, the system integrates data from the image recognition activities performed on the digital images along with configuration data to assist with the interpretation of the data (e.g., configuration data associated with a specific process station).

In some embodiments, the system synchronizes the images capture from multiple cameras so that the status of different gauges can be compared simultaneously.

In some embodiments, simple visual markers on the gauges may be used to simplify the configuration and operation of the system. For example, an operator may mark an analog gauge with a marker to show the system the expected position of a needle or other type of analog display indicator of the gauge.

In some embodiments, the digital images and/or the configuration data for the process station is stored in a central location (e.g., cloud storage). The central location may retain a history of the data to, for example, observe trends in the data that may be used to predict, diagnose, and/or generate preventative information regarding the operation of the process station. In some embodiments, visual representations of the data, advanced diagnostics, predictive and/or preventative information is provided to the operator (e.g., the maintenance staff) of the process station.

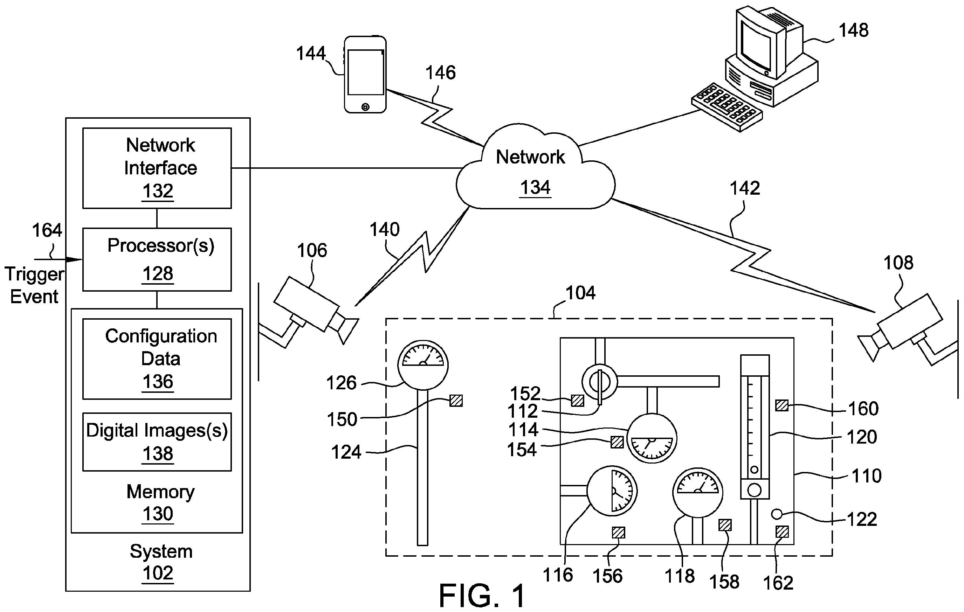

FIG. 1 depicts a block diagram of a system 102 in an exemplary embodiment. System 102 comprises any component, system, or device that performs the functionality described herein for system 102. System 102 will be described with respect to various discrete elements, which perform functions. These elements may be combined in different embodiments or segmented into different discrete elements in other embodiments.

In this embodiment, system 102 operates to monitor a process station 104 utilizing digital images captured by one or more cameras 106, 108. In some embodiments, system 102 is included partially or wholly within one or more of cameras 106, 108. In the embodiment depicted in FIG. 1, process station 104 comprises a cabinet 110, which houses a valve 112, gauges 114, 116, 118, a flowmeter 120, and a status light 122. In this embodiment, process station 104 also comprises a gauge support assembly 124 that supports a stand-alone gauge 126. The specific configuration of valve 112, gauges 114, 116, 118, 126, flowmeter 120, and status light 122 for process station 104 is merely one example configuration, and process station 104 may have other configurations in other embodiments. Thus, process station 104 may comprise any number of valves 112, gauges 114, 116, 118, 126, flowmeters 120, status lights 122, alarm lights, etc., in other embodiments.

In this embodiment, system 102 comprises one or more processors 128 communicatively coupled to a memory 130. In some embodiments, system 102 includes a network interface 132 that communicates with a network 134. Network interface 132 may comprise a wired interface or a wireless interface in different embodiments. Network interface 132 may include various types of interfaces, including for example, Ethernet interfaces, Wi-Fi interfaces, or other types of wired and wireless network interfaces. Network 134 may comprise a local network of an industrial plant, and/or be communicatively coupled to other networks, such as cellular networks and/or the Internet.

In this embodiment, memory 130 of system 102 stores configuration data 136, which defines the expected position(s) of valve 112, the expected values of measurements generated by gauges 114, 116, 118, 126, the expected flow rate(s) measured by flowmeter 120, and the expected status of status light 122 during different operating states of process station 104. Configuration data 136 may store multiple expected positions, measurements, flowrates, and status for valve 112, gauges 114, 116, 118, 126, flowmeter 120, and status light 122, respectively, that vary as process station 104 transitions through different operating states over time. Generally, configuration data 136 is unique with respect to the expected positions, measurements, flowrates, and status at process station 104, and system 102 may include unique sets of configuration data 136 for other process stations, not shown.

During operation, cameras 106, 108 capture digital images 138 of process station 104, which may be provided to system 102 via wireless links 140, 142 and network 134. In other embodiments, cameras 106, 108 are communicatively coupled with network 134 via wired network connections. Digital images 138 may be stored in memory 130 of system 102 in some embodiments. Digital images 138 and/or configuration data 136 may be stored remotely from system 102 in other embodiments. For instance, digital images 138 and/or configuration data 136 may reside in cloud storage and accessed by system 102. In other embodiments, system comprises a cloud-based service that analyzes digital images 138 based on configuration data 136.

During operation, system 102 determines whether a trigger event 164 has occurred, and in response thereto, analyzes and/or directs cameras 106, 108 to capture digital images 138. System 102 analyzes digital images 138 and generates indicia in response to determining that the changes in the position of valve 112, and/or that the changes in the values of measurements of gauges 114, 116, 118, 126, and/or the changes in the values of measurement by flowmeter 120 indicated in digital images 138 deviate from their expected changes as defined in configuration data 136.

In response to detecting a deviation, system 102 may provide indicia to a remote device. In one embodiment, system 102 provides indicia regarding the deviation to user equipment (UE) 144 of an operator. UE 144 may comprise, for example, a smart phone, a tablet, etc. System 102 may communicate with UE 144 via network 134 and wireless link 146. In another embodiment, system 102 provides indicia regarding the deviation to a remote computing system 148 of an operator. System 102 may communicate with remote computing system 148 via network 134 and wired or wireless links in different embodiments.

In another embodiment, system 102 provides information to a remote device in response to determining that the changes in the position of valve 112, and/or that the changes in the values of measurements of gauges 114, 116, 118, 126, and/or the changes in the values of measurements by flowmeter 120 do not deviate from the expected changes as defined in configuration data 136. For example, system 102 may provide information to UE 144, remote computing system 148, or another remote entity, such as cloud storage, regarding the current and/or previous position of valve 112, and/or the current and/or previous measurements of gauges 114, 116, 118, 126, and/or the current and/or previous measurements of flowmeter 120, and/or combinations thereof.

In some embodiments, system 102 provides additional information to UE 144 and/or remote computing system 148, in response to, or independent of, trigger event 164. For example, system 102 may provide a current position of valve 112, the current measurements displayed by gauges 114, 116, 118, 126, and flowmeter 120, and/or the current indicator displayed by status light 122. In addition to or instead of, system 102 may provide the expected position of valve 112, the expected measurements displayed by gauges 114, 116, 118, 126, and flowmeter 120, and/or the expected indicator displayed by status light 122. In other embodiments, system 102 provides any type of additional information to UE 144 and/or remote computing system 148 that indicates to the operator how process station 104 currently deviates from the expected valve positions and/or instrument measurements defined in configuration data 136. For instance, system 102 may indicate to the operator, via UE 144 and/or remote computing system 148, that the current measurement displayed by gauge 114 is 50% above or below the expected measurement for gauge 114, which allows the operator to quickly determine the possible operating issues that are occurring at process station 104.

Configuration data 136 may also include contextual information that is provided to the operator, to enable the operator to recognize how process station 104 is deviating from its expected operating state. For example, system 102 may inform the operator not only that gauge 114 indicates that a temperature is 150 degrees Celsius (C) but also indicate to the operator that gauge 114 measures a temperature of a specific type of gas or liquid, and/or that gauge 114 measures the temperature of a specific step in a process being performed at process station 104. This type of information allows the operator to more fully recognize not only how the temperature displayed by gauge 114 deviates from its expected temperature or range of temperatures, but also, how the temperature displayed by gauge 114 relates to the overall process being performed by process station 104.

In some embodiments, system 102 generates indicia in response to detecting an unexpected rate of change of gauges 114, 116, 118, 126, and/or flowmeter 120. For instance, system 102 may analyze one or more digital images 138 captured over time and identify the rate of change of gauges 114, 116, 118, 126, and/or flowmeter 120, and compare the rate of change with the expected rate of change as defined in configuration data 136. In this embodiment, system 102 may generate indicia if the rate of change is greater than the expected rate of change as defined by configuration data 136. For instance, system 102 may determine that a rate of a temperature rise or decrease over time exceeds a threshold rate, and consequentially, generate indicia.

In some embodiments, process station 104 includes visual tags 150, 152, 154, 156, 158, 160, 162 proximate to gauge 126, valve 112, gauges 114, 116, 118, flowmeter 120, and status light 122, respectively. Visual tags 150, 152, 154, 156, 158, 160, 162 may be used by system 102 to identify the components of process station 104 represented by digital images 138. For instance, visual tags 150, 152, 154, 156, 158, 160, 162 may comprise bar codes, quick response (QR) codes, alphanumeric codes, asset tags, etc., which help system 102 identify the various components of process station 104 to monitor. For example, visual tag 160 proximate to flowmeter 120 may comprise a QR code, which is decoded by system 102 and used as a lookup in configuration data 136, thereby enabling system 102 to identify various expected values or range of values for the measurement displayed by flowmeter 120, along with, in some embodiments, contextual information that further defines how the measurement displayed by flowmeter 120 fits into the overall process being performed by process station 104. Visual tags 150, 152, 154, 156, 158, 160, 162, in some embodiments, instruct system 102 regarding how often to capture digital images 138 of the various components in process station 104 being monitored. For example, visual tag 160 proximate to flowmeter 120 may instruct process station 104 to capture and analyze digital images 138 of flowmeter 120 at a rate that is different from, for example, gauge 126.

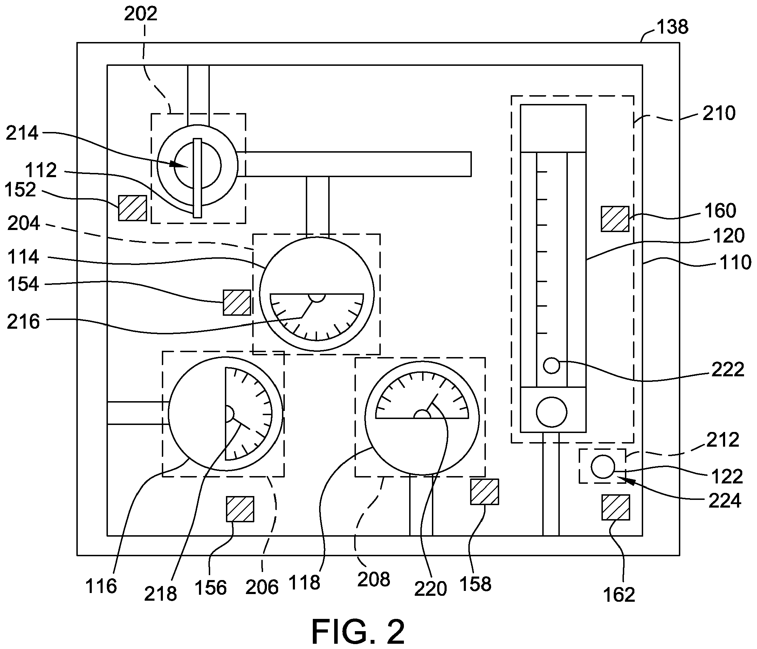

FIG. 2 depicts one of digital images 138 of cabinet 110 of process station 104 in an exemplary embodiment. Digital image 138 includes a number of regions 202, 204, 206, 208, 210, 212 that digitally represent valve 112, gauges 114, 116, 118, flowmeter 120, and status light 122, respectively. Each of regions 202, 204, 206, 208, 210, 212 of digital image 138 include visual indicators 214, 216, 218, 220, 222, 224 associated with the current position of valve 112, measurements displayed by gauges 114, 116, 118, measurement displayed by flowmeter 120, and current status of status light 122, respectively. In this embodiment, region 202 represents a position of a handle of valve 112, region 204 represents a position of a needle displayed by gauge 114, region 206 represents a position of a needle displayed by gauge 116, region 208 represents a position of a needle displayed by gauge 118, region 210 represents a position of a flow ball displayed by flowmeter 120, and region 212 represents an illumination status of status light 122.

During operation, and in response to trigger event 164, system 102 analyzes digital image 138 to identify the changes in the conditions of visual indicators 214, 216, 218, 220, 222, 224 between one or more digital images 138 captured prior to trigger event 164 and one or more digital images 138 captured in response to trigger event 164. For instance, system 102 may be trained to recognize different types of valves, gauges, flow meters, and status lights present in process station 104. Using training and pattern analysis, system 102 identifies valve 112, gauges 114, 116, 118, flowmeter 120, and status light 122 in digital images 138, and identifies the changes in their respective visual indicators 214, 216, 218, 220, 222, 224 based on their spatial relationship and/or orientation with respect to the component being evaluated.

For example, the orientation of the handle of valve 112 within region 202 of digital image 138 defines whether valve 112 is open or closed. Configuration data 136 includes information that defines how variations in the orientation and/or position of visual indicator 214 correspond to whether valve 112 is open or closed, as this is specific to not only the type of valve 112 but also to how valve 112 is mounted within cabinet 110 of process station 104. In response to trigger event 164, system 102 may compare one or more digital images 138 captured prior to trigger event 164 to one or more digital images 138 captured at or after trigger event 164 to determine if the position of valve 112 has changed. System 102 may then generate indicia if the change deviates from the expected change (e.g., the expected change in the position of valve 112 in response to trigger event 164 as defined in configuration data 136).

In another example, the orientation of needles relative to gauges 114, 116, 118 within regions 204, 206, 208 of digital image 138 define the measurements displayed by gauges 114, 116, 118, respectively. Configuration data 136 includes information that defines how variations in the orientation and/or position of visual indicators 216, 218, 220 correspond to the measurements displayed by gauges 114, 116, 118, as this is specific to not only the type of gauges 114, 116, 118 but also to how gauges 114, 116, 118 are mounted within cabinet 110 of process station 104. In response to trigger event 164, system 102 may compare one or more digital images 138 captured prior to trigger event 164 to one or more digital images 138 captured at or after trigger event 164 to determine how or if the values of the measurements displayed by gauges 114, 116, 118 have changed. System 102 may then generate indicia if the changes deviates from the expected changes (e.g., the expected changes in the values of the measurements displayed by gauges 114, 116, 118 in response to trigger event 164 as defined in configuration data 136).

In another example, the orientation and/or position of the flow ball of flowmeter 120 within region 210 of digital image 138 defines the measurements displayed by flowmeter 120. Configuration data 136 includes information that defines how variations in the orientation and/or position of visual indicator 222 corresponds to the measurements displayed by flow meter, as this is specific to not only the type of flowmeter 120 but also to how flowmeter 120 is mounted within cabinet 110 of process station 104. In response to trigger event 164, system 102 may compare one or more digital images 138 captured prior to trigger event 164 to one or more digital images 138 captured at or after trigger event 164 to determine if the measurements displayed by flowmeter 120 have changed. System 102 may then generate indicia if the change deviates from the expected change (e.g., the expected change in the measurement displayed by flowmeter 12 in response to trigger event 164 as defined in configuration data 136).

In one embodiment, whether visual indicator 224 is present or not present within region 212 of digital image 138 defines the current status of status light 122. Configuration data 136 includes information that defines how variations in visual indicator 224 corresponds to the status displayed by status light 122. In another embodiment, whether visual indicator 224 corresponds to a particular color, flashing frequency, etc., defines the current status of status light 122. In response to trigger event 164, system 102 may compare one or more digital images 138 captured prior to trigger event 164 to one or more digital images 138 captured at or after trigger event 164 to determine if the status displayed by status light 122 has changed. System 102 may then generate indicia if the change deviates from the expected change (e.g., the expected change in status light in response to trigger event 164 as defined in configuration data 136).

In some embodiments, gauges 114, 116, 118 and/or flowmeter 120 include other visual features that provide information to system 102 regarding their current status. For example, gauges 114, 116, 118 and/or flowmeter 120 may be color coded such that inspection of their visual indicators 216, 218, 220, 220 conveys their current status (e.g., using red, green, and yellow background colors at gauges 114, 116, 118, and/or flowmeter 120). In these embodiments, system 102 may be trained to generate indicia if the needles of gauges 114, 116 ,118, and/or the flow ball of flowmeter 120 move into, for example, a red-colored region of gauges 114, 116, 118, and/or flowmeter 120, respectively in a way that deviates from their expected movement. In other embodiments, an operator may mark a face of gauges 114, 116, 118, and/or flowmeter 120 with a marker, which system 102 may use to determine if indicia should be generated if the needles of gauges 114, 116, 118 and/or the flow ball of flowmeter 120 deviate away from or outside of, the custom mark made by the operator away from their expected changes.

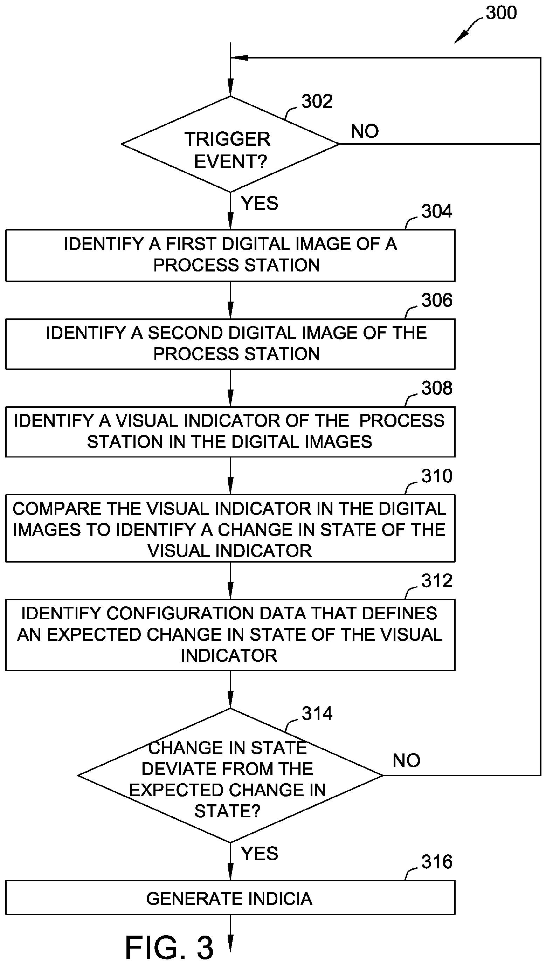

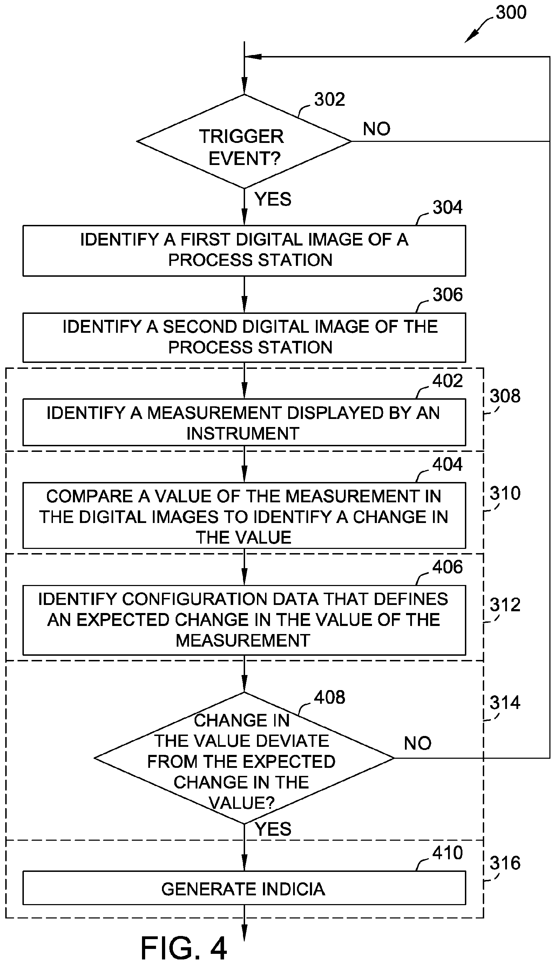

FIG. 3 is a flow chart of a method 300 of monitoring a process station in an exemplary embodiment, and FIGS. 4-6 depict additional optional details of method 300 in exemplary embodiments. Method 300 may be performed system 102 or other systems, not shown or described.

Method 300 begins by determining (302) whether a trigger event has occurred. For example, processor 128 may determine if trigger event 164 has been detected. Trigger event 164 may include any of the previous triggers described.

In response to the trigger event being detected, method 300 continues by identifying (304) a first digital image of the process station captured prior to the trigger event. For example, processor 128 identifies one or more digital images 138 stored in memory 130 and captured by cameras 106, 108 prior to trigger event 164 (see FIG. 1).

Method 300 continues by identifying (306) a second digital image of the process station captured in response to the trigger event. For example, processor 128 identifies one or more digital images 138 stored in memory 130 and captured by cameras 106, 108 in response to (e.g., at or after) trigger event 164 (see FIG. 1).

Method 300 continues by identifying (308), in the first and second digital images, a visual indicator of the process station. For example, processor 128 identifies one or more of visual indicators 214, 216, 218, 220, 222, 224 in digital images 138 (see FIGS. 1, 2).

Method 300 continues by comparing (310) the visual indicator in the first digital image to the visual indicator in the second digital image to identify a change in the visual indicator. For example, processor 128 analyzes one or more visual indicators 214, 216, 218, 220, 222, 224 to identify the change in the one or more of visual indicators 214, 216, 218, 220, 222, 224 (see FIGS. 1, 2).

Method 300 continues by identifying (312) configuration data for the process station that defines an expected change of the visual indicator. For example, processor 128 identifies configuration data 136 that defines one or more expected changes of visual indicators 214, 216, 218, 220, 222, 224 (see FIGS. 1, 2).

Method 300 continues by determining (314) whether the change deviates from the expected change. For example, processor 128 determines whether the change in one or more of the visual indicators 214, 216, 218, 220, 222, 224 deviate from their expected change as defined in configuration data 136 (see FIGS. 1, 2).

Method 300 continues by generating (316) indicia representative of the identified change in response to determining that the change deviates from the expected change. For example, processor 128 transmits indicia to, for example, UE 144 and/or remote computing system 148, which directs an operator to investigate the current status of process station 104 (see FIG. 1). The operator may then correct the issue at process station 104, thereby resolving the issue at process station 104. Generally, the indicia may include any type of information as desired. For instance, the indica may comprise an alert generated at UE 144 and/or remote computing system 148. The alert may include a noise, a vibration, etc.

In an optional embodiment, method 300 comprises identifying (402; see FIG. 4), in the first and second digital images, a measurement displayed by an instrument of the process station. For example, processor 128 identifies a measurement displayed by visual indicator 216 (the needle) of gauge 114 in different digital images 138, captured before and after trigger event 164 (see FIG. 2).

Method 300 continues in this embodiment by comparing (404) a value of the measurement in the first digital image to a value of the measurement in the second digital image to identify a change in the value of the measurement. For example, processor 128 identifies the change in value of the measurement for gauge 114 based on the position of visual indicator 216 (the needle) for gauge 114 in different digital images 138, captured before and after trigger event 164 (see FIG. 2).

Method 300 continues in this embodiment by identifying (406) an expected change in the value of the measurement as defined in the configuration data. For example, processor 128 may analyze configuration data 136 to identify the expected change in the value for the measurement displayed by gauge 114 (e.g., in response to trigger event 164).

Method 300 continues in this embodiment by determining (408) whether the change in value of the measurement deviates from the expected change in value of the measurement. For instance, processor 128 determines whether the change in value of the measurement deviates from the expected change in value of the measurement.

Method 300 continues in this embodiment by generating (410) indicia in response to determining that the change in value of the measurement deviates from the expected change in value of the measurement. For example, processor 128 transmits indicia to, for example, UE 144 and/or remote computing system 148, which directs an operator to investigate the current status of process station 104 (see FIG. 1). The operator may then correct the issue at process station 104, thereby resolving the issue at process station 104.

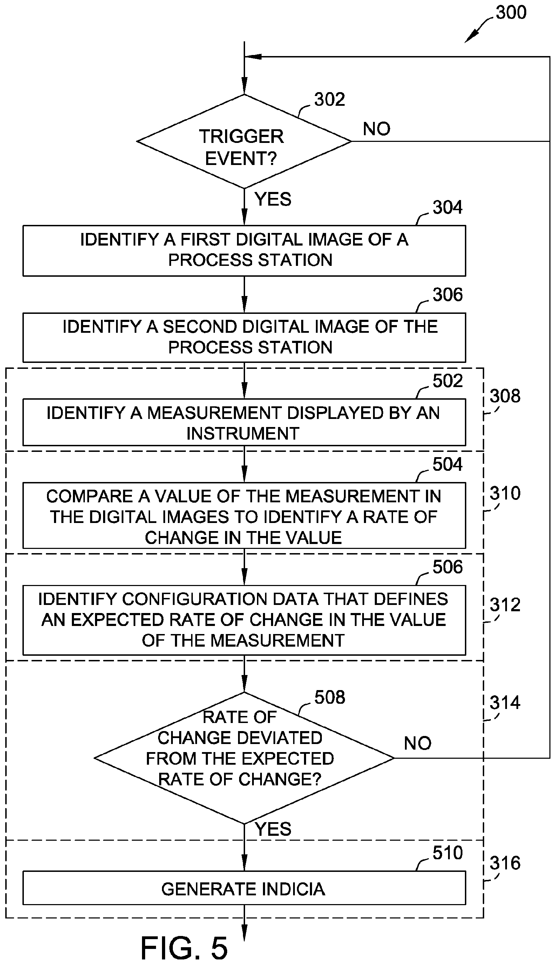

In another optional embodiment, method 300 comprises identifying (502; see FIG. 5), in the first and second digital images, a measurement displayed by an instrument of the process station. For example, processor 128 identifies a measurement displayed by visual indicator 216 (the needle) of gauge 114 (see FIG. 2) in one or more different digital images 138 captured before and at or after trigger event 164.

Method 300 continues in this embodiment by comparing (504) a value of the measurement in the first digital image to a value of the measurement in the second digital image to identify a rate of change of the value of the measurement. For example, processor 128 identifies the rate of change the measurement for gauge 114 based on variations in the position of visual indicator 216 (the needle) for gauge 114 between digital images 138 captured prior to trigger event 164 and digital images captured in response to (e.g., at or after) trigger event 164 (see FIG. 2).

Method 300 continues in this embodiment by identifying (506) an expected rate of change of the value of the measurement as defined in the configuration data. For example, processor 128 may analyze configuration data 136 to identify the expected rate of change of the value of the measurement displayed by gauge 114 (e.g., in response to trigger event 164).

Method 300 continues in this embodiment by determining (508) whether the rate of change of the value of the measurement is greater than the expected rate of change of the value of the measurement. For example, processor 128 determines whether the rate of change deviates from the expected rate of change.

Method 300 continues in this embodiment by generating (510) indicia in response to determining that the rate of change in the value of the measurement deviates from the expected rate of change in the value of the measurements. For example, processor 128 transmits indicia to, for example, UE 144 and/or remote computing system 148, which directs an operator to investigate the current status of process station 104 (see FIG. 1). The operator may then correct the issue at process station 104, thereby resolving the issue at process station 104.

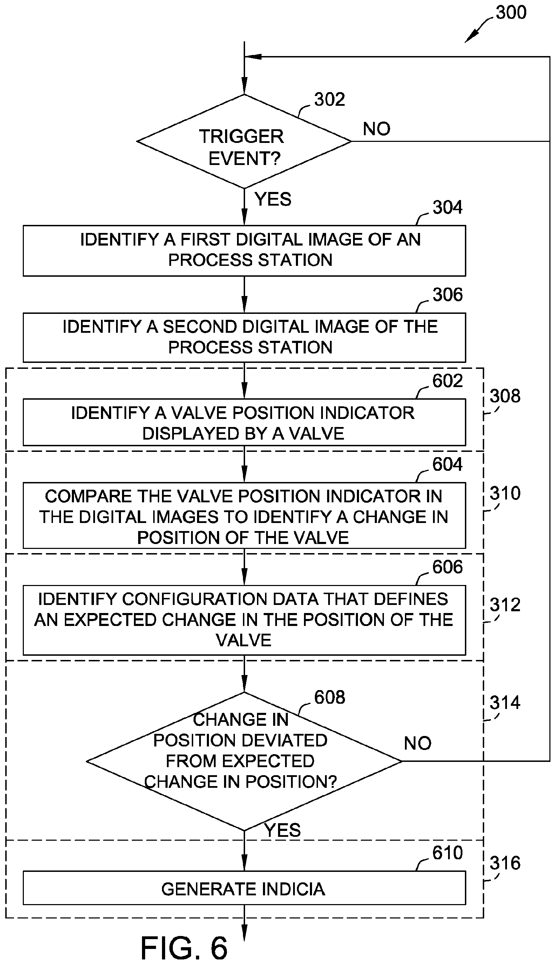

In yet another optional embodiment, method 300 comprises identifying (602; see FIG. 6), in the first and second digital images, a valve position indicator displayed by a valve of the process station. For example, processor 128 identifies visual indicator 214 (the handle) of valve 112 (see FIG. 2) in digital images 138 captured by cameras 106, 108 both before and at or after trigger event 164.

Method 300 continues in this embodiment by comparing (604) the valve position indicator in the first digital image to the valve position indicator in the second digital image to identify a change in position of the valve. For example, processor 128 analyzes visual indicator 214, a valve handle in this embodiment, in digital images 138 captured by cameras 106, 108 both before and at or after trigger event 164, to identify the change in position of valve 112.

Method 300 continues in this embodiment by identifying (606) an expected change in position of the valve as defined in the configuration data. For example, processor 128 may analyze configuration data 136 to identify the expected change position of valve 112 in response to trigger event 164.

Method 300 continues in this embodiment by determining (608) whether the change in the position of the valve deviates from the expected change in the position of the valve. For example, processor 128 determines whether the change in the position of valve 112 deviates from the expected change in the position of valve 112.

Method 300 continues in this embodiment by generating (610) indicia in response to determining that the change in the position of the valve deviates from the expected change in the position of the valve. For example, processor 128 transmits indicia to, for example, UE 144 and/or remote computing system 148, which directs an operator to investigate the current status of process station 104 (see FIG. 1). The operator may then correct the issue at process station 104, thereby resolving the issue at process station 104.

An example technical effect of the embodiments described herein includes at least one of: (a) improving the reliability of process stations using automated digital image monitoring; (b) reducing operator tasks associated with manually observing the operational status of the process station; (c) reducing the costs associated with automated monitoring using digital image analysis; (d) providing automated tools for predicting failures in process stations using trends in the historical data generated while monitoring the process station; and (e) determining when changing conditions at an process station deviate from their expected changes.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (102) for monitoring a process station (104), the system comprising:
at least one processor (128) configured to:
detect a trigger event (164);
identify, in response to the trigger event, a first digital image (138) of the process station captured prior to the trigger event;
identify a second digital image (138) of the process station captured in response to the trigger event;
identify, in the first digital image and the second digital image, a visual indicator (214, 216, 218, 220, 222, 224) of the process station;
compare the visual indicator in the first digital image to the visual indicator in the second digital image to identify a change in the visual indicator;
identify configuration data (136) for the process station that defines an expected change in the visual indicator from the first digital image to the second digital image;
determine whether the change deviates from the expected change; and
generate indicia representative of the identified change in response to determining that the change deviates from the expected change.

2. The system of claim 1, wherein:
the visual indicator comprises a measurement displayed by an instrument (114, 116, 118, 120, 126) of the process station, the change comprises a change in a value of the measurement, and the expected change comprises an expected change in the value of the measurement.

3. The system of claim 2, wherein:
the measurement comprises at least one of a flow rate, a temperature, and a pressure.

4. The system of claim 1, wherein:
the visual indicator comprises a measurement displayed by an instrument (114, 116, 118, 120, 126) of the process station, the change comprises a rate of change in a value of the measurement, and the expected change comprises an expected rate of change in the value of the measurement.

5. The system of any one of claims 1 to 4, wherein:
the visual indicator comprises a valve position indicator (214) displayed by a valve (112) of the process station, the change comprises a change in a position of the valve, and the expected change comprises an expected change in the position of the valve.

6. The system of any one of claims 1 to 5, wherein:
the trigger event comprises at least one of a noise, a vibration, a valve actuation, an enclosure opening at the process station, and a motion detected proximate to the process station.

7. The system of any one of claims 1 to 6, wherein:
the at least one processor is further configured to identify, in the first digital image and the second digital image, the visual indicator based on at least one of: a pre-defined region (202, 204, 206, 208, 210, 212) within the first digital image and the second digital image, an alphanumeric code (150, 152, 154, 156, 158, 160, 162) proximate to visual indicator, a barcode (150, 152, 154, 156, 158, 160, 162) proximate to the visual indicator, and a QR code (150, 152, 154, 156, 158, 160, 162) proximate to the visual indicator.

8. The system of any one of claims 1 to 7, wherein:
the process station comprises a sample conditioning system configured to precondition samples of at least one of a liquid and a gas prior to submission of the samples to an analysis system.

9. A method (300) of monitoring a process station (104), the method comprising:
detecting (302) a trigger event (164);
identifying (304), in response to the trigger event, a first digital image (138) of the process station captured prior to the trigger event;
identifying (306) a second digital image (138) of the process station captured in response to the trigger event;
identifying (308), in the first digital image and the second digital image, a visual indicator (214, 216, 218, 220, 222, 224) of the process station;
comparing (310) the visual indicator in the first digital image to the visual indicator in the second digital image to identify a change in the visual indicator;
identifying (312) configuration data (136) for the process station that defines an expected change in the visual indicator from the first digital image to the second digital image;
determining (314) whether the change deviates from the expected change; and
generating (316) indicia representative of the identified change in response to determining that the change deviates from the expected change.

10. The method of claim 9, wherein:
identifying the visual indicator further comprises:
identifying (402) a measurement displayed by an instrument (114, 116, 118, 120, 126) of the process station;
comparing the visual indicator further comprises:
comparing (404) a value of the measurement in the first digital image to a value of the measurement in the second digital image to identify a change in the value of the measurement;
identifying the configuration data further comprises:
identifying (406) an expected change in the value of the measurement from the first digital image to the second digital image as defined in the configuration data;
determining whether the change deviates from the expected change further comprises:
determining (408) whether the change in the value of the measurement deviates from the expected change in the value of the measurement; and
generating the indicia further comprises:
generating (410) the indicia in response to determining that the change in the value of the measurement deviates from the expected change in the value of the measurement.

11. The method of claim 10, wherein:
the measurement comprises at least one of a flow rate, a temperature, and a pressure.

12. The method of claim 9, wherein:
identifying the visual indicator further comprises:
identifying (502) a measurement displayed by an instrument (114, 116, 118, 120, 126) of the process station;
comparing the visual indicator further comprises:
comparing (504) a value of the measurement in the first digital image to a value of the measurement in the second digital image to identify a rate of change in the value of the measurement;
identifying the configuration data further comprises:
identifying (506) an expected rate of change in the value of the measurement from the first digital image to the second digital image as defined in the configuration data;
determining whether the change deviates from the expected change further comprises:
determining (508) whether the rate of change in the value of the measurement deviates from the expected rate of change in the value of the measurement; and
generating the indicia further comprises:
generating (510) the indicia in response to determining that the rate of change in the value of the measurement deviates from the expected rate of change in the value of the measurement.

13. The method of any one of claims 9 to 12, wherein:
identifying the visual indicator further comprises:
identifying (602) a valve position indicator (214) displayed by a valve (112) of the process station;
comparing the visual indicator further comprises:
comparing (604) the valve position indicator in the first digital image to the valve position indicator in the second digital image to identify a change in position of the valve;
identifying the configuration data further comprises:
identifying (606) an expected change in position of the valve as defined in the configuration data;
determining whether the change deviates from the expected change further comprises:
determining (608) whether the change in position of the valve deviates from the expected change in position of the valve; and
generating the indicia further comprises:
generating (610) the indicia in response to determining that the change in position of the valve deviates from the expected change in position of the valve.

14. The method of any one of claims 9 to 13, wherein identifying the visual indicator comprises identifying at least one of:
a pre-defined region (202, 204, 206, 208, 210, 212) within the first digital image and the second digital image, an alphanumeric code (150, 152, 154, 156, 158, 160, 162) proximate to the visual indicator, a barcode (150, 152, 154, 156, 158, 160, 162) proximate to the visual indicator, and a QR code (150, 152, 154, 156, 158, 160, 162) proximate to the visual indicator.

15. The method of any one of claims 9 to 14, wherein detecting the trigger event comprises detecting at least one of:
a noise, a vibration, a valve actuation, an enclosure opening at the process station, and a motion detected proximate to the process station.
